# EUROPÄISCHE PATENTSCHRIFT

(11) **EP 1 625 044 B1**
(45) Veröffentlichungstag und Bekanntmachung des Hinweises auf die Patenterteilung: **20.01.2010**
(21) Anmeldenummer: 04741492.5
(22) Anmeldetag: 29.04.2004
(51) Int. Cl.: B60L 7/26

(54) **VERFAHREN FÜR DIE REGELUNG EINES BREMSSYSTEMS EINES KRAFTFAHRZEUGES**
METHOD FOR REGULATING AN AUTOMOTIVE BRAKE SYSTEM
PROCEDE DE REGULATION D'UN SYSTEME DE FREINAGE D'UN VEHICULE

(30) Priorität: 13.05.2003 DE 10321644
(43) Veröffentlichungstag der Anmeldung: 15.02.2006
(73) Patentinhaber: Continental Teves AG & Co. oHG, 60488 Frankfurt (DE)
(72) Erfinder: HAUPT, Karlheinz, 55435 Gau-Algesheim (DE); ECKERT, Alfred, 55129 Mainz-Hechtsheim (DE)
(86) Internationale Anmeldenummer: PCT/EP2004/050641
(87) Internationale Veröffentlichungsnummer: WO 2004/101308

(56) Entgegenhaltungen:
- EP-A- 1 106 461
- EP-A- 1 167 151
- US-A- 5 326 158
- US-A- 5 853 229
- US-A1- 2002 011 362
- US-A1- 2003 173 826

## Beschreibung

Die Erfindung betrifft ein Verfahren für die Regelung eines Bremssystems, insbesondere für die Regelung eines regenerativen Bremssystems mit einer Anzahl von Reibbremsen und einer elektrisch-regenerativen Bremse für ein Kraftfahrzeug.

Der Zweck von regenerativen Bremssystemen bei Kraftfahrzeugen besteht darin zumindest einen Teil der beim Bremsen aufgebrachten Energie im Fahrzeug zu speichern und für den Antrieb des Fahrzeuges wiederzuverwenden. Dadurch kann der Energieverbrauch des Fahrzeuges insgesamt gesenkt, der Wirkungsgrad erhöht und der Betrieb damit wirtschaftlicher gestaltet werden. Kraftfahrzeuge mit einem regenerativen Bremssystem weisen dazu in der Regel verschidene Arten von Bremsen auf, die auch Bremsaktuatoren genannt werden. Das Dokument EP1106461 offenbart ein Verfahren für ein Bremsystem mit den Merkmalen der Oberbegriffs des Anspruchs 1. Dabei werden in der Regel hydraulische Reibbremsen, wie sie aus gewöhnlichen Kraftfahrzeugen bekannt sind, und eine elektrisch-regenerative Bremse eingesetzt. Der Bremsdruck für die Reibbremsen wird wie bei konventionellen Reibbremsen über ein Bremsdruckerzeugungsmittel bzw. über die Bremspedalbewegung aufgebracht. Die elektrisch-regenerative Bremse ist in der Regel als elektrischer Generator ausgebildet über den zumindest ein Teil der gesamten Bremsleistung aufgebracht wird. Die gewonnene elektrische Energie wird in ein Speichermedium wie beispielsweise eine Bordbatterie ein- bzw. zurückgespeist und für den Antrieb des Kraftfahrzeuges über einen geeigneten Antrieb wiederverwendet.

Regenerative Bremssysteme können als sogenannte serielle regenerative Konzepte ausgeführt werden, bei denen der Anteil des Bremsmomentes, der vom Generator aufgebracht wird möglichst hoch ist. Dagegen sind auch parallele oder sogenannte Schleppmoment-basierte regenerative Konzepte bekannt, bei denen das Bremsmoment auf die Bremsaktuatoren in vorbestimmten Verhältnissen aufgeteilt wird. Weiterhin sind Mischkonzepte dieser beiden Bremskonzepte bekannt. Allen Systemen gemeinsam ist, dass zumindest in einigen Bereichen des aufzubringenden Bremsmomentes mit mehreren Bremsaktuatoren gleichzeitig gebremst wird, so dass sich die Gesamtverzögerung aus den Verzögerungsanteilen der Bremsaktuatoren zusammensetzt.

Grundsätzlich sind bei seriellen regenerativen Bremssystemen sogenannte "x-by-wire" Bremssysteme bekannt. Bei "x-by wire" - Bremssystemen wird im allgemeinen eine Aufteilung der Bremsenergie in Anteile der Reibbremsen und in Anteile des elektrischen Generators vorgenommen, die vom Sollbremsmoment, dem Ladezustand der Batterie und besonders dem Betriebsbereich und anderen speziellen Eigenschaften des Generators abhängig ist. Bei "x-by-wire"-Bremssystemen wird der Bremsdruck, wegen der Bremsenergieaufteilung, daher unabhängig vom hydraulischen Einfluss des Bremspedals aufgebaut.

Bei konventionellen Bremssystemen dagegen, die nur eine Reibbremse aufweisen, wird der Bremsdruck in Abhängigkeit der Stellung des Bremspedals aufgebaut. Dabei wird über die Stellung des Bremspedals mit oder ohne Hilfsenergie der Druck eines Bremsmittels aufgebaut, das von der Reibbremse aufgenommen wird. Die Pedalstellung korrespondiert also mit dem Bremsverhalten des Kraftfahrzeuges. Ausnahmen können die Einsätze von elektronischen Sicherheitssystemen, wie des elektrischen Stabilitätsprogrammes (ESP) sein, die Einrichtungen zum selbständigen Bremsdruckaufbau, unabhängig von der Bremspedalsstellung, umfassen können.

Im Vergleich zu diesem konventionellen Bremsverhalten ist beim Bremsverhalten eines "x-by-wire"-Bremssystems nachteilig, dass die Stellung des Bremspedals nicht mit dem Bremsverhalten des Kraftfahrzeuges korrespondiert. So kann beispielsweise während einer Erhöhung der Bremsbeschleunigung, die Stellung des Bremspedals konstant bleiben, was für den Fahrer ein sehr ungewohntes Bremsgefühl darstellt. Dieses Bremssystemverhalten stellt daher einen sehr schlechten Bremskomfort dar. Weiterhin ist es möglich, dass der Fahrer durch das ungewohnte bzw. vom Bremsverhalten des Kraftfahrzeuges abweichende Bremsgefühl, insbesondere während eines Bremsvorgangs, zu einem häufigen Umwechseln der Bremspedalstellung verleitet wird, was neben dem ungewöhnlichen Bremsgefühl auch die Fahrzeugsicherheit, beispielsweise durch Ablenkung des Fahrers beim Bremsen, herabsetzten kann.

Der Erfindung liegt daher die Aufgabe zugrunde, ein Verfahren für die Regelung eines Bremssystems, das eine elektrisch-regenerative Bremse, insbesondere einen Generator und eine Anzahl von Reibbremsen aufweist, anzugeben, so dass sich ein hoher Bremskomfort mit dem Bremssystem ereichen lässt.

Diese Aufgabe wird erfindungsgemäß mit einem Verfahren gemäß Anspruch 1 und einem Bremssystem gemäß Anspruch 5 gelöst. Die Erfindung geht von der Überlegung aus, dass ein Bremsmoment der elektrisch-regenerativen Bremse bzw. des Generators während eines Bremsvorgangs in einer sich verändernden Größe zur Verfügung steht. Dies liegt unter anderen daran, dass elektrisch-regenerative Bremsen wie Generatoren durch ihre spezifischen Eigenschaften eingeschränkte Arbeitsbereiche aufweisen. So sind diese beispielsweise auf bestimmte Geschwindigkeitsbereiche und auf Maximalbremsmomente begrenzt. Um die elektrisch-regenerative Bremse mit einem hohen Wirkungsgrad zur Realisierung eines seriellen regenerativen Bremssystems nutzen zu können, kann diese daher nicht ständig parallel zu hydraulischen Reibbremsen genutzt werden, sondern nur in denen für sie geeigneten Bereichen.

Im Falle eines derartigen Arbeitsbetriebes der elektrisch-regenerativen Bremse kommt es jedoch zu einer vermeindlichen Störung der Druckverbrauchsbilanz des Bremsmittels der Reibbremsen, weil im Vergleich zu einer rein konventionellen Bremsung mit Reibbremsen bei Betrachtung der erreichten Beschleunigungsverzögerung weniger vom Bremsdruckerzeugungsmittel aufgebrachten Bremsdruck von den Reibbremsen abgebaut wird, da die elektrisch regenerative Bremse den Bremsmitteldruck nicht verringert bzw. bei Betrieb kein Druckvolumen in Anspruch nimmt. Die Erfindung geht daher weiterhin von der Überlegung aus, dass man zur Erreichung eines komfortablen Bremsverhaltens, das Bremsverhalten eines konventionellen Bremssystems mit Reibbremsen für den Bremsmomentanteil der elektrisch-regenerativen Bremse simulieren müsste. Daher wird beim Bremsen mit einer elektrisch-regenerativen Bremse Bremsmittel in einen Druckspeicher abgeleitet, um so ein zusätzliches Bremsen der Reibbremsen zu simulieren. Auf diese Weise wird der Druck des Bremsmittels bzw. das Druckvolumen verringert, was wiederum auf das Bremsdruckerzeugungsmittel zurückwirkt. Wenn als Bremsdruckerzeugungsmittel ein Bremspedal eingesetzt wird, das hilfskraftgesteuert sein kann, gibt dieses bei einer Bremsung mit der elektrisch regenerativen Bremse entsprechend des abgeleiteten Bremsmittels nach, wodurch sich der vorher herrschende Bremsdruck und damit ein komfortables Bremsgefühl einstellt.

Um dabei genau das entsprechende Bremsverhalten, das bei Reibbremsen eintreten würde zu simulieren, wird vorteilhafterweise genau das Druckvolumen von Bremsmittel abgeleitet, das von Reibbremsen verringert werden würde, wenn das von einer elektrisch-regenerativen Bremse aufgebrachte Bremsmoment allein mit hydraulischen Reibbremsen aufzubringen wäre.

Für eine exakte Bestimmung des Bremswunsches wird zweckmäßigerweise ein Sollbremsmoment über das Bremspedal des Bremssystems ermittelt.

Dazu weist das Bremspedal vorzugsweise einen Pedalweggeber auf und einen Drucksensor, der in der zum Druckerzeugungsmittel bzw. dem Bremspedal führenden Hydraulikleitung positioniert ist. Der Drucksensoren und der Pedalweggeber können dabei für eine hohe Betriebssicherheit vorteilhafterweise redundant ausgeführt sein. Aus einer Ermittlung der Position des Bremspedals, die über den Weggeber erfolgt, und dem anliegenden Bremspedaldruck, der sich über die Drucksensoren ergibt, lässt sich das Sollbremsmoment ermitteln.

Für die Regelung des Bremssystems während eines Bremsvorgangs wird ein Bremsvorgang vorteilhafterweise über eine elektronische Regeleinheit in eine Anzahl von zeitlichen Phasen aufgeteilt, wobei sich diese durch die Aufteilung des Bremsmomentes von Reibbremsen und elektrisch-regenerativen Bremse unterscheiden. Dabei wird der Tatsache Rechnung getragen, dass die elektrisch-regenerative Bremse nur in ausgewählten Arbeitsbereichen eingesetzt werden kann. Außerdem kann bei einer Änderung des Wirkungsgrades der elektrisch-regenerativen Bremse, der sich bei Betrieb im Verlauf ändern kann, durch die Aufteilung in mehrere zeitliche Regelungsphasen, der Bremsmomentanteil der elektrisch-regenerativen Bremse erhöht oder verringert werden. Durch die Phasenaufteilung lässt sich daher ein Bremsen mit einem hohen Bremsanteil der elektrisch regenerativen Bremse realisieren.

Um bei diesen Phasen den Druck des Bremsmittels für ein dem Bremsverhalten entsprechendes Bremsgefühl einzuregeln, wird zweckmäßigerweise während eines Bremsvorganges über eine Regeleinheit ein erster Regelprozess durchgeführt, der Sollbremsdrücke an den Reibbremsen einregelt und ein zweiter Regelprozess durchgeführt, mit dem der Druck eines Bremsmittels, der auf ein Bremsdruckerzeugungsmittel zurückwirkt, zur Einstellung einer durch das Bremssystem vorgegebenen Kraft/Weg-Verzögerungslinie für ein Bremserzeugungsmittel eingestellt. Die Überlegung dabei ist, dass eine Veränderung des Bremsmoments der Reibbremsen eine Änderung des Drucks des Bremsmittels bewirkt, so dass zunächst ein Sollbremsmoment an den Reibbremsen eingeregelt werden sollte. Anschließend ist der entsprechende Druck des Bremsmittels für das Bremserzeugungsmittel einzuregeln, der vorzugsweise an vorgegebenen Kraft/Weg-Verzögerungslinien eingestellt wird, um ein das Verzögerungsverhalten entsprechenden Druck und geeignetes Druckvolumen des Bremsmittels zu erhalten. Dies geschieht unter der Anforderung, dass sich der ergebende Druck und das sich ergebende Druckvolumen nicht zu einer nicht ungewünschten Änderung des Sollbremsdruckes an den Reibbremsen führt und man wie beabsichtigt gleichzeitig einen das Bremsverhalten darstellenden Druck bzw. Druckvolumen des Bremsmittels erhält, was auf das Druckerzeugungsmittel bzw. das Bremspedal zurückwirkt.

Um diese Regelprozesse im Bremssystem einzuregeln, werden die sich durch einen Regelprozess ergebenden Anforderungen an das zugrunde liegende Bremssystem vorzugsweise über eine Regeleinheit eingeregelt, wobei je nach Zustand des Bremssystems eine der beiden Phasen eingestellt wird.

Für die Einstellung der Phasen am Bremssystem weist das Bremssystem neben den bereits beschriebenen Komponenten vorteilhafterweise eine Hydraulikeinheit mit elektrisch steuerbaren Hydraulikventilen und Hydraulikleitungen auf, die die Komponenten des Bremssystems miteinander verbinden.

Um das Bremsmittel bei der Einregelung des Bremsmitteldrucks möglichst einfach über ein Hydraulikventil in den Druckspeicher abführen zu können, ist der Druckspeicher im Vergleich zum Hydrauliksystem des Bremssystems zweckmäßigerweise als Niederdruckspeicher ausgelegt. Um Bremsmittel in den Druckspeicher ableiten zu können muss aufgrund des Druckunterschiedes lediglich ein Hydraulikventil geöffnet werden.

Für eine Änderung des Sollbremsmomentes der Reibbremsen kann es beim Ziel eines komfortablen Bremsverhaltens erforderlich sein, das Bremsmoment nicht über das Druckerzeugungsmittel bzw. das Bremspedal zu verändern. Eine derartige Anforderung kann vorliegen, wenn das Bremsmoment bei konstantem Bremsverzögerungswunsch von der elektrisch-regenerativen Bremse auf die Reibbremse verlagert wird-. Deshalb weist die Hydraulikeinheit vorzugsweise ein weiteres Bremsdruckerzeugungsmittel mit Hilfsenergie auf, mit dem hydraulischer Bremsdruck über ein Bremsmittel für die Reibbremsen erzeugt werden kann.

Um dabei den Druck des Bremsmittels und damit die Sollverzögerung nicht zu verändern ist der Druckspeicher vorteilhafterweise ausgangsseitig mit dem weiteren Bremsdruckerzeugungsmittel verbunden. Bei einer Bremsmomentumverteilung von elektrisch-regenerativer Bremse auf die Reibbremsen wird das dafür benötigte Druckvolumen des Bremsmittels über das weitere Druckerzeugungsmittel aus dem Druckspeicher in den Bremsmitteldruckkreislauf bzw. die entsprechenden Hydraulikleitungen der Reibbremsen befördert. Dabei ändert sich also lediglich das Druckvolumen und nicht der Druck des Bremsmittels. Ein Einfluss auf das erste Bremsdruckerzeugungsmittel wird dadurch verhindert. Über das weitere Bremsdruckerzeugungsmittel kann der Druckspeicher nach einer Bremsung durch die ausgangsseitige Anordnung am Druckspeicher ebenfalls wieder entleert werden.

Um die vorgesehenen Druckerzeugungsprozesse mit den Bremsdruckerzeugungsmitteln aufbringen zu können, ist zweckmäßigerweise das eine Bremsdruckerzeugungsmittel ein mit Hilfskraft betriebener Hauptbremszylinder, insbesondere Tandemhauptzylinder und das weitere Druckerzeugungsmittel eine elektrisch ansteuerbar Hydraulikpumpe, insbesondere Zahnradpumpe.

Um den für einen Bremsvorgang und insbesondere für die durchzuführenden Regelprozesse den Bremsdruck des Bremsmittels an den Reibbremsen erfassen zu können, ist in einer Anzahl zu den Reibbremsen führenden Hydraulikleitungen ein Drucksensor zur Messung des Drucks eines Bremsmittels positioniert. Über die Erfassung des Bremsmitteldrucks können die oben beschriebenen Prozesse über die elektronische Steuereinheit berechnet und eingeregelt werden.

Dazu können die elektrisch steuerbaren Hydraulikventile vorzugsweise derart angesteuert werden, dass eine Druckregelung über ein Hydraulikventil vorgenommen werden kann.

Die mit der Erfindung erzielten Vorteile bestehen insbesondere in der Möglichkeit ein rein serielles regeneratives Bremssystem mit einem sehr komfortablen Bremsverhalten zur Verfügung zu stellen. Im optimalen Fall entspricht das Bremsverhalten dem Bremsverhalten eines konventionellen Bremssystems mit Reibbremsen, so dass der Fahrer im optimalen Fall keinen Unterschied bemerkt. Durch die Einregelung eines geeigneten Bremsdruckes, der auf das Bremspedal zurückwirkt kann ein hoher Bremsmomentanteil der elektrisch-regenerativen Bremse bzw. des Generators gewährleistet werde, so dass beim Bremsen vergleichsweise viel Energie wiedergewonnen wird, wodurch sich der Wirkungsgrad des Kraftfahrzeuges erhöht.

Weitere Vorteile die sich durch die Erfindung ergeben sind, dass mit dem beschriebenen Bremssystem und dem Verfahren elektronische Sicherheitsprogramme wie ABS und ESP realisieren lassen. Außerdem kann mit dem System eine sogenannte OHB-V Funktion durchgeführt werden. Dabei kann ein nicht ausreichender Druck der über einen Bremskraftverstärker bzw. ein Bremsdruckerzeugungsmittel aufgebracht wird mit dem weiteren Bremsdruckerzeugungsmittel zusätzlich verstärkt werden.

Zusätzlich ist es möglich eine quer orientierte elektronische Bremsverteilung ohne Bremspedalbeeinflussung zu realisieren, indem der Bremsdruck der Reibbremsen zwischen links und rechts verlagert wird.

Ein Ausführungsbeispiel wird anhand der Figuren 1 bis 7 erläutert. Darin zeigt
- Figur 1: den Bremswunsch und den Radbremsdruck bei einem Bremsvorgang, der in die Phasen 1 bis 5 aufgeteilt ist,
- Figur 2: ein Bremssystem (1) bei Phase 1,
- Figur 3: ein Bremssystem (1) bei Phase 2,
- Figur 4: ein Bremssystem (1) bei Phase 3,
- Figur 5: ein Bremssystem (1) bei Phase 4,
- Figur 6: ein Bremssystem (1) bei Phase 5 und
- Figur 7: ein Diagramm zur Darstellung einer Pedalkennlinie.

Gleiche Teile sind in allen Figuren mit denselben Bezugszeichen versehen.

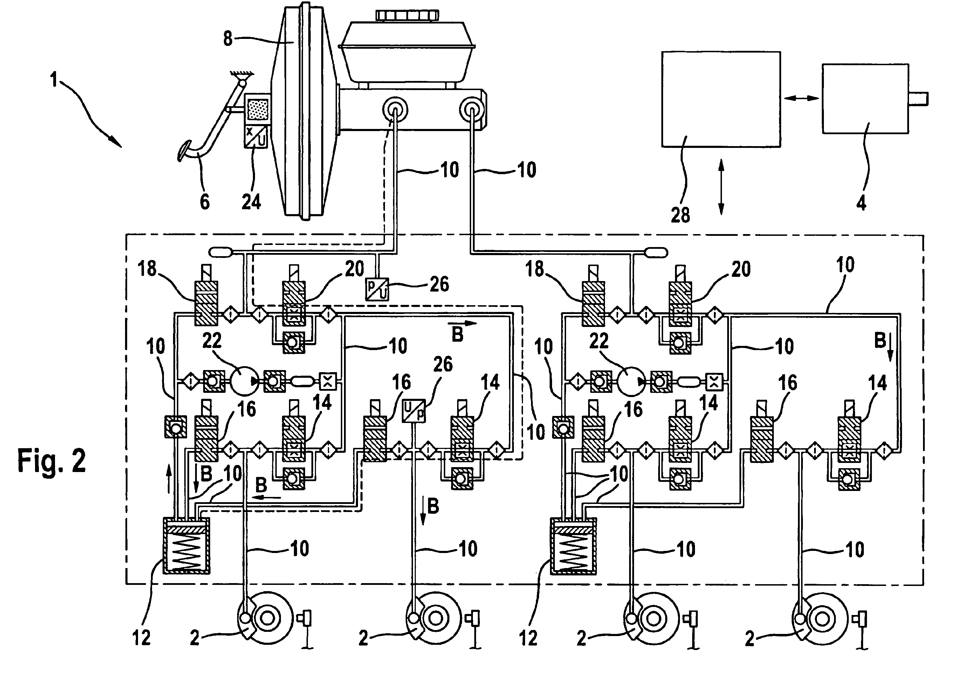

In Figur 2 ist ein Prinzipschaltplan eines Bremssystems 1 für ein Kraftfahrzeug dargestellt. Bei dem Bremssystem 1 handelt es sich um ein regeneratives Bremssystem 1, das neben den 4 Reibbremsen 2 auch einen elektrischen Generator 4 zur Erzeugung von elektrischer Energie aufweist. Das Bremssystem 1 ist als rein serielles Bremssystem 1 ausgeliegt, wobei ein möglichst hohes Bremsmoment über den elektrischen Generator 4 aufgebracht werden soll, um eine hohe Wirtschaftlichkeit des Kraftfahrzeuges zu erzielen.

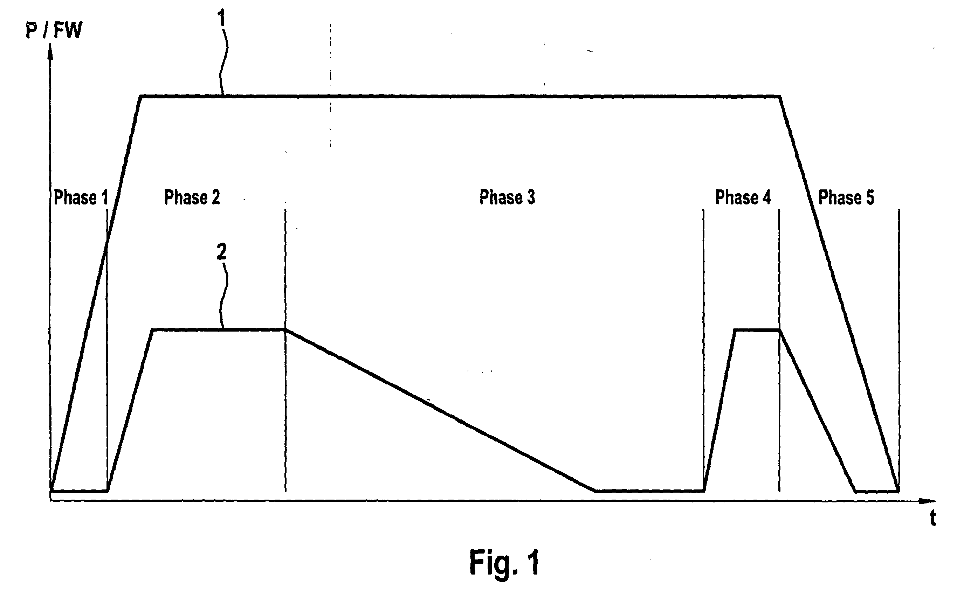

Um dies näher zu erläutern ist in Figur 1 ein Bremsvorgang dargestellt, wobei Kurve 1 den Verzögerungswunsch, der über das Bremspedal 6 vom Fahrer des Kraftfahrzeuges eingegeben wird, und Kurve 2 den Druck des Bremsmittels B einer Reibbremse 2 in Abhängigkeit der Zeit dargestellt. Dabei wird eine bestimmte Anfangsgeschwindigkeit des Kraftfahrzeuges zugrunde gelegt. Der Bremsvorgang ist dabei in 5 Phasen unterteilt. In Phase 1 wird das Bremspedal 6 kräftig niedergetreten. Dabei wird zunächst bei noch nicht voll betätigtem Bremspedal 6 das gesamte Bremsmoment vom Generator 4 aufgebracht. Am Übergang zu Phase 2 wird der Bereich verlassen, in dem der Generator 4 das Bremsmoment vollständig leisten kann, so dass in Phase 2 der Bremsmomentanteil der Reibbremse 2 bis zum Endwert ansteigt. In Phase 3 ist die Geschwindigkeit des Kraftfahrzeuges auf einen Bereich abgefallen, in dem der Generator 4 beginnt mit höherem Wirkungsgrad zu arbeiten, so dass der Bremsanteil der Reibbremse 2 bis 0 abnimmt. In Phase 4 wird der optimale Arbeitsbereich des Generators 4 wieder verlassen, so dass der Anteil der Reibbremse 2 wieder steigt. In Phase 5 wird das Bremspedal 6 durch den Fahrer losgelassen und die Bremsmomente von Reibbremse 2 und Generator 4 gehen auf 0 zurück. Die Phasen des Bremsvorganges werden über eine elektronische Regeleinheit 28 eingeregelt, die insbesondere auch das Bremsmoment des Generators 4 einregelt.

Um das Hauptbremsmoment für die Reibbremsen 2 aufzubringen ist das Bremssystem 1 mit einem Bremskraftverstärker versehen, der als Tandemhauptzylinder 8 mit Hilfskraft ausgelegt ist. Dabei wird der vom Tandemhauptzylinder 8 aufgebrachte Bremsdruck über Hydraulikleitungen 10 mit einem Bremsmittel B an die Reibbremsen 2 weitergegeben.

Neben einer hohen Wirtschaftlichkeit des Bremssystems 1 ist ein weiteres Auslegungsziel ein möglichst komfortables Bremsgefühl über das Bremspedal 6 für den Fahrer zu realisieren. Dafür kann bei Betrieb des Generators 4 Bremsmittel B in die Druckspeicher 12 abgeleitet werden.

Um das Bremssystem 1 hierfür entsprechend zu regeln ist die elektronische Regeleinheit 28 derart ausgelegt, dass sich das Bremssystem 1 und insbesondere das Hydrauliksystem des Bremssystems 1 entsprechend der Phasen eines Bremsvorgangs mit der Regeleinheit 28 über entsprechenden elektronisch steuerbare Hydraulikventilen einregeln lässt. Die Ventile 14 und 16 sind danach bezeichnet, ob sie stromlos also ohne elektrische Ansteuerung geöffnet oder geschlossen sind. Das SO-Ventil 14 ist stromlos geöffnet und das SG-Ventil 16 stromlos geschlossen. Das EU-Ventil 18 entspricht einem elektronischen Umschaltventil.

Ein Regelvorgang weist grundsätzlich einen ersten Regelprozess auf, der das Sollbremsmoment an den Reibbremsen 2 einregelt und einen zweiten Regelprozess, der zur Einstellung einer durch das Bremssystem 1 vorgegebenen Kraft/Weg-Verzögerungslinie für das Bremsmittel B verwendet wird, um eine entsprechende Position und Druck des Bremspedals 6 zu erreichen.

Als Eingangs- und Steuergrößen dienen dabei das Sollbremsmoment und der Bremsmitteldruck an den Reibbremsen 2. Wie sich aus Figur 2 erkennen lässt, wird zunächst über einen Weggeber 24, der am Bremspedal 6 positioniert ist, und einen Drucksensor 26, der sich an der zum Tandemhauptzylinder 8 führenden Hydraulikleitung 10 befindet, das Sollbremsmoment über die elektronische Regeleinheit 28 bestimmt. Der Bremsmitteldruck an den Reibbremsen 2 ergibt sich über einen Drucksensor 26, der in einer Hydraulikleitung einer Reibbremse positioniert ist.

Wie sich aus Figur 2 erkennen lässt, weist das Bremssystem 1 zwei Druckspeicher 12 und für jede Reibbremse 2 eine Anzahl von Hydraulikkomponenten auf. Im folgenden wird-der Regelablauf des Bremssystems 1 für den oben beschriebenen Bremsvorgang lediglich an einer Reibbremse 2 erläutert. Die Systemkomponenten der anderen Reibbremsen 2 funktionieren entsprechend. Der Verlauf des Bremsmittels B in der Hydraulikeinheit ist dabei durch Linien gekennzeichnet.

Bei Phase 1 des Bremsvorgangs wird über die elektronische Regeleinheit 28 das SG-Ventil 16 voll geöffnet und das SO-Ventil 14 geregelt geöffnet, so dass Bremsmittel B aus der Hydraulikleitung 10 der Reibbremse 2 in den Druckspeicher 12 abgeführt wird. Um dies zu gewährleisten ist der Druckspeicher 12 im Vergleich zur Hydraulikleitung 10 als Niederdruckspeicher ausgeführt. Durch das Ableiten von Bremsmittel B wird der Betrieb einer Reibbremse simuliert. Das Bremspedal 6 gibt entsprechend dem abgeleiteten Druckvolumen nach, so dass sich ein komfortables bzw. dem Fahrverhalten entsprechendes Bremsgefühl einstellt.

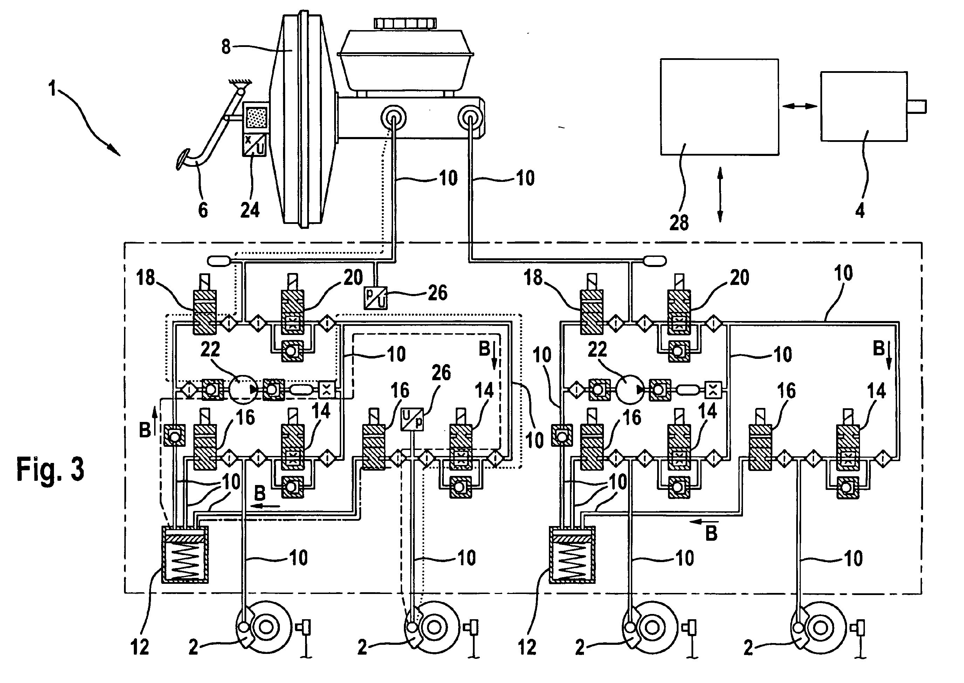

Um in Phase 2, die in Figur 3 dargestellt ist, das Bremsmoment der Reibbremse 2 zu erhöhen wird Bremsmittel B aus dem Druckspeicher 12 in die Hydraulikleitung 10 der Reibbremse 2 gepumpt. Dazu wird das Motorpumpenaggregat 22 eingesetzt, das ausgangsseitig des Drucksspeichers 12 positioniert ist, und als elektrisch über die Regeleinheit ansteuerbare Zahnradpumpe ausgelegt ist. Die Einregelung des entsprechenden Bremsdrucks der Reibbremse 2 erfolgt über das SO- Ventil 14. Der Druck im Tandemhauptzylinder 8 und damit der anliegende Druck am Bremspedal 6 wird mit dem EU-Ventil 18 eingeregelt. Wie aus den Linien in Figur 3 ersichtlich ist überlagern sich die Drücke. Überflüssiges Bremsmittel B wird geregelt über das SG-Ventil 16 in den Druckspeicher 12 abgegeben.

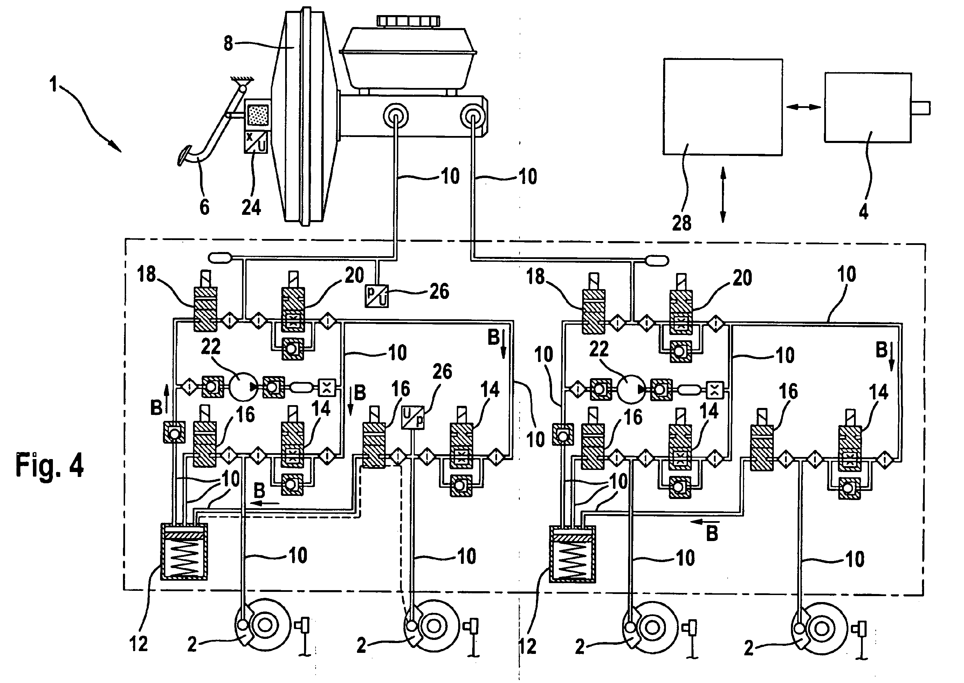

Phase 3 ist in Figur 4 dargestellt. Um das Bremsmoment der Reibbremse 2 zu verringern wird über das SG-Ventil 16 Bremsmittel B in den Druckspeicher 12 abgeleitet. Dabei wird durch eine geeignete Regelung des ASR-Ventils 20 und des SO-Ventils 14 der Druck im Tandemhauptzylinder 8 konstant gehalten, so dass die Bremsmomentumverteilung nicht auf das Bremspedal 6 zurückwirkt.

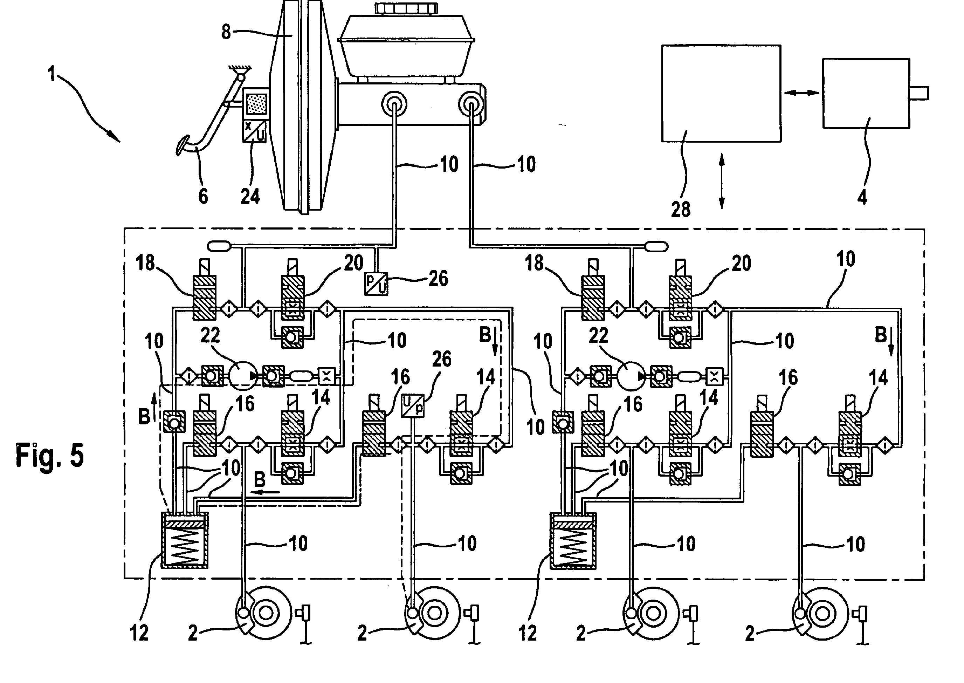

In Phase 4 des Bremsvorgangs, die in Figur 5 abgebildet ist, wird Bremsmittel B aus dem Druckspeicher 12 mit dem Motorpumpenaggregat 22 über das SO-Ventil 14 zurück zur Hydraulikleitung 10 der Reibbremse 2 gepumpt, um das Bremsmoment dort zu erhöhen. Dabei wird der Bremsmitteldruck im Tandemhauptzylinder 8 durch das SO-Ventil 14 konstant gehalten und überflüssiges Bremsmittel B über das SG-Ventil 16 in den Druckspeicher 12 abgegeben.

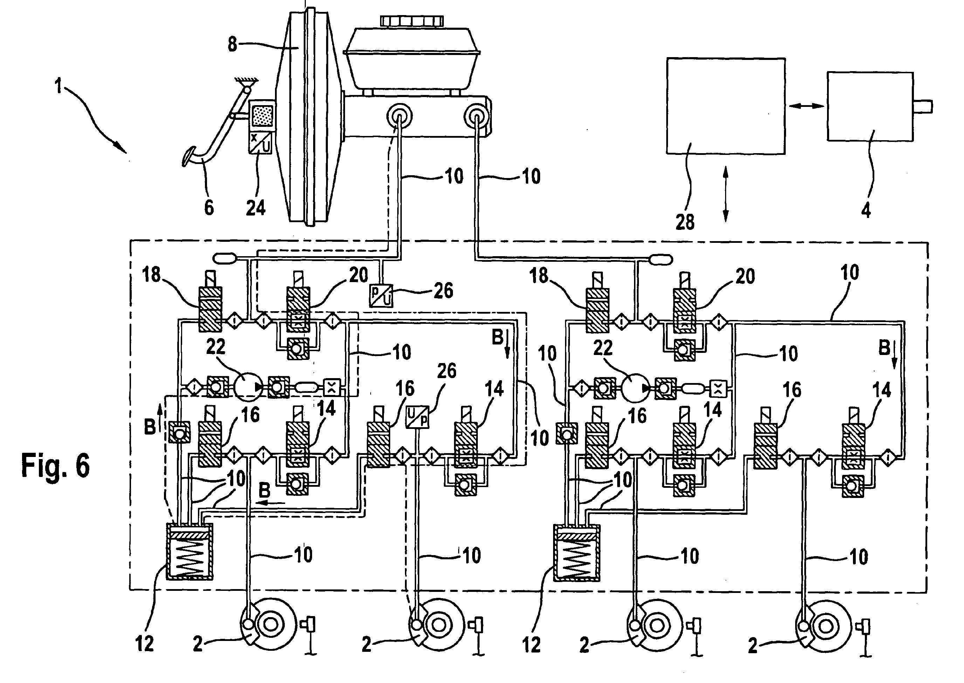

In Phase 5, wie in Figur 6 dargestellt ist, wird der Druck an der Reibbremse 2 über das SG-Ventil 16, über Abgabe von Bremsmittel B in den Druckspeicher 12, abgebaut. Dabei wird der Druck im Tandemhauptzylinder 8 vom Motorpumpenaggregat 22 und dem ASRV Ventil 20 auf dem vom Fahrer über den Pedalweg und über eine Kraft/Weg-Verzögerungskennlinie eingeregelt. Das SO-Ventil 14 regelt einen Staudruck ein, der höher ist als der Druck im Tandemhauptzylinder 8, so dass dabei das Bremspedal 6 an seine ursprüngliche Position zurückgedrückt wird.

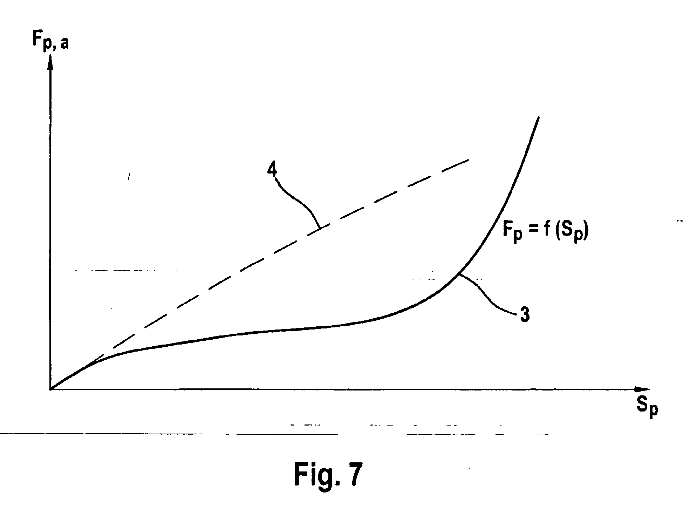

Zur Verdeutlichung der Bremspedalbewegung ist in Figur 7 in Linie 3 der prinzipielle Verlauf der Pedalkraft in Abhängigkeit des Pedalweges des Bremspedals 6 dargestellt. Im Vergleich dazu ist ebenfalls der prinzipielle Verlauf der Verzögerung in Abhängigkeit des Pedalwegs in Linie 4 dargestellt.

### Bezugszeichenliste

- 1: Bremssystem
- 2: Reibbremse
- 4: Generator
- 6: Bremspedal
- 8: Tandemhauptzylinder
- 10: Hydraulikleitung
- 12: Druckspeicher
- 14: SO-Ventil
- 16: SG-Ventil
- 18: EU-Ventil
- 20: ASR-Ventil
- 22: Motorpumpenaggregat
- 24: Weggeber
- 26: Drucksensor
- 28: Regeleinheit

- B: Bremsmittel

## Patentansprüche

1. Verfahren für ein Bremssystem (1) eines Kraftfahrzeuges, das eine elektrisch-regenerative Bremse, insbesondere einen Generator (4) und eine Anzahl von mindestens einem Bremsdruckerzeugungsmittel über ein Bremsmittel (B) betätigte hydraulische Reibbremsen (2) aufweist, dessen Gesamtverzögerung sich aus Verzögerungsanteilen der Reibbremsen (2) und der elektrisch-regenerativen Bremse zusammensetzt, wobei das mindestens eine Bremsdruckerzeugungsmittel durch einem mit Hilfskraft betriebenem Hauptzylinder, insbesondere Tandemhauptzylinder (8), gebildet wird und wobei beim Bremsen mit einer elektrisch regenerativen Bremse Bremsmittel (B) in einen Druckspeicher (12) abgeleitet wird, wobei ein Bremsvorgang über eine elektronische Regeleinheit (28) in eine Anzahl von zeitlichen Phasen aufgeteilt wird, wobei sich diese durch die Aufteilung des Bremsmomentes von Reibbremsen (2) und elektrisch-regenerativen Bremse unterscheiden, **dadurch gekennzeichnet, dass** während eines Bremsvorganges über eine Regeleinheit (28), ein erster Regelprozess durchgeführt wird, der Sollbremsdrücke an den Reibbremsen (2) einregelt und ein zweiter Regelprozess durchgeführt wird, mit dem der Druck eines Bremsmittels (B), das auf ein Bremsdruckerzeugungsmittel zurückwirkt, zur Einstellung einer durch das Bremssystem (1) vorgegebenen Kraft/Weg-Verzögerungslinie für ein Bremserzeugungsmittel eingestellt wird, wobei der Druck im Tandemhauptzylinder (8) und damit der anliegende Druck am Bremspedal (6) mit einem elektronischen Umschaltventil (18) eingeregelt wird.

2. Verfahren nach Anspruch 1, bei dem genau das Druckvolumen von Bremsmittel (B) abgeleitet wird, das von Reibbremsen (2) verringert werden würde, wenn das von einer elektrisch-regenerativen Bremse aufgebrachte Bremsmoment allein mit hydraulischen Reibbremsen (2) aufzubringen wäre.

3. Verfahren nach einem der Ansprüche 1 oder 2, bei dem ein Sollbremsmoment über das Bremspedal (6) des Bremssystems (1) ermittelt wird.

4. Verfahren nach einem der Ansprüche 1 bis 3, bei dem die sich durch einen Regelprozess ergebenden Anforderungen an das zugrunde liegende Bremssystem (1) über eine Regeleinheit (28) eingeregelt werden, wobei je nach Zustand des Bremssystems (1) eine der genannten Phasen eingestellt wird.

5. Bremssystem (1) eines Kraftfahrzeuges, insbesondere zum Durchführen eines Verfahrens nach einem der Ansprüche 1 bis 6, das ein Bremsdruckerzeugungsmittel mit oder ohne Hilfsenergie, das mit einem Bremspedal (6) verbunden ist, zum Erzeugen von hydraulischem Bremsdruck über ein Bremsmittel (B) für Reibbremsen (2) des Bremssystems (1), einen elektronisch steuerbaren Generator (4) zur Erzeugung elektrischer Energie aus der Bewegungsenergie des Kraftfahrzeuges, eine elektronische Regeleinheit (28), eine Hydraulikeinheit mit elektrisch steuerbaren Hydraulikventilen, eine Anzahl von Druckspeichern (12) und Hydraulikleitungen (10), die die Verbindung zwischen Hydraulikventilen (14,16,18,20), Bremsdruckerzeugungsmitteln, Reibbremsen (2) und einem Druckspeicher (12) herstellen, aufweist, wobei das Bremsdruckerzeugungsmittel durch einem mit Hilfskraft betriebenem Hauptzylinder, insbesondere Tandemhauptzylinder (8), gebildet wird und wobei das Bremssystem (1) derart ausgelegt ist, dass eine Ableitung eines von einem Bremsdruckerzeugungsmittel aufgebrachten Bremsmittelvolumens in einen Druckspeicher (12) erfolgen kann, **dadurch gekennzeichnet, dass** Mittel vorgesehen sind, die während eines Bremsvorganges über eine Regeleinheit (28), einen ersten Regelprozess durchführen, der Sollbremsdrücke an den Reibbremsen (2) einregelt und einen zweiten Regelprozess durchführen, mit dem der Druck eines Bremsmittels (B), das auf ein Bremsdruckerzeugungsmittel zurückwirkt, zur Einstellung einer durch das Bremssystem (1) vorgegebenen Kraft/Weg-Verzögerungslinie für ein Bremserzeugungsmittel eingestellt wird, wobei die Mittel den Druck im Tandemhauptzylinder (8) und damit den anliegenden Druck am Bremspedal (6) mit einem elektronischen Umschaltventil (18) einregeln.

6. Bremssystem (1) nach einem der Anspruch 5, das über eine elektronische Regeleinheit (12) regelbar ist.

7. Bremssystem (1) nach Anspruch 5 oder 6, dessen Druckspeicher (12) im Vergleich zum Hydrauliksystem des Bremssystems (1) als Niederdruckspeicher ausgelegt ist.

8. Bremssystem (1) nach einem der Ansprüche 5 bis 7, bei dem die Hydraulikeinheit ein weiteres Bremsdruckerzeugungsmittel mit Hilfsenergie, zum Erzeugen von hydraulischem Bremsdruck über ein Bremsmittel (B) für Reibbremsen (2) aufweist.

9. Bremssystem (1) nach einem der Ansprüche 5 bis 8, dessen Druckspeicher (12) ausgangsseitig mit dem weiteren Bremsdruckerzeugungsmittel verbunden ist.

10. Bremssystem (1) nach einem der Ansprüche 5 bis 9, bei dem in einer Anzahl von zu den Reibbremsen (2) führenden Hydraulikleitungen (10) ein Drucksensor (26) zur Messung des Drucks eines Bremsmittels (B) positioniert ist.

11. Bremssystem (1) nach einem der Ansprüche 5 bis 10, bei dem elektrisch regelbaren Hydraulikventile (14, 16, 18, 20) so angesteuert werden können, dass eine Druckregelung über ein Hydraulikventil (14,16,18,20) vorgenommen werden kann.

12. Bremssystem (1) nach einem der Ansprüche 5 bis 11, dessen Bremspedal (6) eine Anzahl von Weggebern (24) aufweist.

13. Bremssystem (1) nach einem der Ansprüche 5 bis 12, das eine Anzahl von Drucksensoren (26), zur Messung des Drucks eines Bremsmittels (B), aufweist, wobei ein Drucksensor (26) in einer Hydraulikleitung (10) positioniert ist, die zu einem Bremsdruckerzeugungsmittel führt.

## Claims

1. Method for a brake system (1) of a motor vehicle which has an electric regenerative brake, in particular a generator (4), and a number of hydraulic friction brakes (2) which are activated by at least one brake-pressure-generating means using a braking medium (B), the overall deceleration of which is composed of deceleration components of the friction brakes (2) and of the electric regenerative brake, wherein the at least one brake-pressure-generating means is formed by a master cylinder, in particular a tandem master cylinder (8), which is operated with auxiliary force, and wherein, in the case of braking with an electric regenerative brake, braking medium (B) is diverted into a pressure accumulator (12), wherein a braking process is divided into a number of chronological phases by means of an electronic regulating unit (28), wherein said chronological phases differ in the apportionment of the braking torque by friction brakes (2) and the electric regenerative brake,
**characterized in that** during a braking process, a first regulating process is carried out by means of a regulating unit (28), which regulating process applies setpoint braking pressures to the friction brakes (2), and a second regulating process is carried out with which the pressure of a braking medium (B), which reacts on a brake-pressure-generating means, is set in order to set a force/travel deceleration line, predefined by the brake system (1) for a brake-generating means, wherein the pressure in the tandem master cylinder (8), and therefore the pressure present at the brake pedal (6), are applied with an electronic changeover valve (18).

2. Method according to Claim 1, in which the pressure volume of braking means (B) which is diverted is precisely the pressure volume which would be reduced by friction brakes (2) if the braking torque applied by an electric regenerative brake were to be applied solely using hydraulic friction brakes (2).

3. Method according to one of Claims 1 or 2, in which a setpoint braking torque is detected via the brake pedal (6) of the brake system (1).

4. Method according to one of Claims 1 to 3, in which the requirements which are made of the underlying brake system (1) due to a regulating process are applied by means of a regulating unit (28), wherein, depending on the state of the brake system (1), one of the aforesaid phases is set.

5. Brake system (1) of a motor vehicle, in particular for carrying out a method according to one of Claims 1 to 6, which has a brake-pressure-generating means with or without auxiliary energy which is connected to a brake pedal (6), for generating hydraulic brake pressure using a braking medium (B) for friction brakes (2) of the brake system (1), an electronically controllable generator (4) for generating electrical energy from the movement energy of the motor vehicle, an electronic regulating unit (28), a hydraulic unit with electrically controllable hydraulic valves, a number of pressure accumulators (12) and hydraulic lines (10) which bring about the connection between hydraulic valves (14, 16, 18, 20), brake-pressure-generating means, friction brakes (2) and a pressure accumulator (12), wherein the brake-pressure-generating means is formed by a master cylinder, in particular a tandem master cylinder (8) which is operated with auxiliary force, and wherein the brake system (1) is configured in such a way that a braking medium volume which is applied by a brake-pressure-generating means can be diverted into a pressure accumulator (12),
**characterized in that** means are provided which, during a braking process using a regulating unit (28), carry out a first regulating process which applies setpoint brake pressures to the friction brakes (2), and carry out a second regulating process with which the pressure of a braking medium (B) which reacts on a brake-pressure-generating means is set in order to set a force/travel deceleration line, predefined by the brake system (1), for a brake-generating means, wherein the means apply the pressure in the tandem master cylinder (8) and therefore the pressure which is present at the brake pedal (6) using an electronic changeover valve (18).

6. Brake system (1) according to Claim 5, which can be regulated by means of an electronic regulating unit (12).

7. Brake system (1) according to Claim 5 or 6, the pressure accumulator (12) of which is configured as a low-pressure accumulator compared to the hydraulic system of the brake system (1).

8. Brake system (1) according to one of Claims 5 to 7, in which the hydraulic unit has a further brake-pressure-generating means with auxiliary energy for generating hydraulic braking pressure using a braking medium (B) for friction brakes (2).

9. Brake system (1) according to one of Claims 5 to 8, the pressure accumulator (12) of which is connected on the outlet side to the further brake-pressure-generating means.

10. Brake system (1) according to one of Claims 5 to 9, in which a pressure sensor (26) for measuring the pressure of a braking medium (B) is positioned in a number of hydraulic lines (10) leading to the friction brakes (2).

11. Brake system (1) according to one of Claims 5 to 10, in which hydraulic valves (14, 16, 18, 20) which can be regulated electrically can be actuated in such a way that pressure regulation can be performed by means of a hydraulic valve (14, 16, 18, 20).

12. Brake system (1) according to one of Claims 5 to 11, the brake pedal (6) of which has a number of travel sensors (24).

13. Brake system (1) according to one of Claims 5 to 12, which has a number of pressure sensors (26) for measuring the pressure of a braking medium (B), wherein a pressure sensor (26) is positioned in a hydraulic line (10) which leads to a brake-pressure-generating means.

## Revendications

1. Procédé de régulation d'un système de freinage (1) d'un véhicule automobile qui présente un frein à récupération d'électricité, en particulier un générateur (4) et plusieurs freins hydrauliques à friction (2) actionnés par l'intermédiaire d'un moyen de freinage (B) par au moins un moyen d'établissement d'une pression de freinage et dont le ralentissement total est constitué de fractions de ralentissement apportées par les freins à friction (2) et par le frein à régénération d'électricité,
le ou les moyens d'établissement d'une pression de freinage étant formés par un cylindre principal entraîné à l'aide d'une force auxiliaire, en particulier un cylindre principal tandem (8),
le moyen de freinage (B) étant envoyé dans une réserve sous pression (12) lors du freinage à l'aide d'un frein à régénération d'électricité,
une opération de freinage étant divisée par une unité électronique de régulation (28) en plusieurs phases temporelles qui se distinguent par la répartition du couple de freinage entre les freins à friction (2) et le frein à régénération d'électricité,
**caractérisé en ce que**
pendant une opération de freinage, une première opération de régulation qui régule les pressions nominales de freinage sur les freins à friction (2) et une deuxième opération de régulation qui régule la pression d'un moyen de freinage (B) qui rétroagit sur un moyen d'établissement d'une pression de freinage sont réalisées par une unité de régulation (28) de manière à établir dans le système de freinage (1) une ligne force-parcours de ralentissement prédéterminée pour un moyen d'établissement de freinage et
**en ce que** la pression dans le cylindre principal tandem (8) et donc la pression appliquée sur la pédale de frein (6) sont régulées par une soupape électronique de commutation (18).

2. Procédé selon la revendication 1, dans lequel le volume sous pression d'agent de freinage (B) qui a été diminué par les freins à friction (2) est déterminé au cas où le couple de freinage appliqué par un frein à régénération d'électricité avait été appliqué uniquement par les freins hydrauliques à friction (2).

3. Procédé selon l'une des revendications 1 ou 2, dans lequel un couple de freinage de consigne est déterminé par l'intermédiaire de la pédale de frein (6) du système de freinage (1).

4. Procédé selon l'une des revendications 1 à 3, dans lequel les exigences découlant de l'opération de régulation et appliquées sur le système de freinage (1) concerné sont réglées par une unité de régulation (28) et en ce que l'une desdites phases est établie en fonction de l'état du système de freinage (1).

5. Système de freinage (1) d'un véhicule automobile, servant en particulier à exécuter un procédé selon l'une des revendications 1 à 6, lequel système de freinage présente
un moyen d'établissement d'une pression de freinage avec ou sans énergie auxiliaire et relié à une pédale de frein (6) pour établir une pression hydraulique de freinage par l'intermédiaire d'un moyen de freinage (B) pour les freins à friction (2) du système de freinage (1),
un générateur (4) commandé électroniquement pour produire de l'énergie électrique à partir de l'énergie cinétique du véhicule automobile, une unité électronique de régulation (28), une unité hydraulique dotée de soupapes hydrauliques à commande électrique, plusieurs réservoirs sous pression (12) et conduits hydrauliques (10) qui assurent la liaison entre les soupapes hydrauliques (14, 16, 18, 20), les moyens d'établissement d'une pression de freinage, les freins à friction (2) et un réservoir sous pression (12), les moyens d'établissement d'une pression de freinage étant formés par un cylindre principal entraîné à l'aide d'une force auxiliaire, en particulier un cylindre principal tandem (8),
le système de freinage (1) étant conçu de manière à pouvoir déterminer un volume de moyen de freinage appliqué par un moyen d'établissement de la pression de freinage dans une réserve sous pression (12),
**caractérisé en ce que**
il présente des moyens qui, pendant une opération de freinage exécutent par l'intermédiaire d'une unité de régulation (28) une première opération de régulation qui régule les pressions de freinage de consigne des freins à friction (2) et une deuxième opération de régulation qui régule la pression d'un moyen de freinage (B) qui rétroagit sur un moyen d'établissement d'une pression de freinage pour établir dans le système de freinage (1) une ligne force-parcours de ralentissement prédéterminée pour un moyen de formation de freinage et
**en ce que** les moyens régulent la pression dans le cylindre principal tandem (8) et donc la pression appliquée sur la pédale de frein (6) à l'aide d'une soupape électronique de commutation (18).

6. Système de freinage (1) selon la revendication 5, apte à être régulé par une unité électronique de régulation (12).

7. Système de freinage (1) selon les revendications 5 ou 6, dans lequel la réserve sous pression (12) est conçue comme réserve à pression plus basse que celle du système hydraulique du système de freinage (1).

8. Système de freinage (1) selon l'une des revendications 5 à 7, dans lequel l'unité hydraulique présente un autre moyen d'établissement d'une pression de freinage à l'aide d'énergie auxiliaire pour établir la pression hydraulique de freinage des freins à friction (2) par l'intermédiaire d'un moyen de freinage (B).

9. Système de freinage (1) selon l'une des revendications 5 à 8, dont la sortie de la réserve sous pression (12) est reliée à l'autre moyen d'établissement d'une pression de freinage.

10. Système de freinage (1) selon l'une des revendications 5 à 9, dans lequel une sonde de pression (26) qui mesure la pression d'un moyen de freinage (B) est placée dans plusieurs conduits hydrauliques (10) qui conduisent aux freins à friction (2).

11. Système de freinage (1) selon l'une des revendications 5 à 10, dans lequel des soupapes hydrauliques (14, 16, 18, 20) à régulation électrique peuvent être commandées de manière à pouvoir réguler la pression par l'intermédiaire d'une soupape hydraulique (14, 16, 18, 20).

12. Système de freinage (1) selon l'une des revendications 5 à 11, dont la pédale de freinage (6) présente plusieurs détecteurs de course (24).

13. Système de freinage (1) selon l'une des revendications 5 à 12, qui présente plusieurs sondes de pression (26) qui mesurent la pression d'un moyen de freinage (B), une sonde de pression (26) qui conduit à un moyen d'établissement d'une pression de freinage étant placée dans un conduit hydraulique (10).
